# EUROPÄISCHE PATENTSCHRIFT

(11) **EP 2 178 341 B1**
(45) Veröffentlichungstag und Bekanntmachung des Hinweises auf die Patenterteilung: **01.08.2012**
(21) Anmeldenummer: 09173143.0
(22) Anmeldetag: 15.10.2009
(51) Int. Cl.: H05B 6/80

(54) **Garverfahren mit zumindest einem Kerntemperaturfühler**
Cooking method with at least one core temperature probe
Procédé de cuisson doté d'au moins un capteur de température central

(30) Priorität: 15.10.2008 DE 102008051566
(43) Veröffentlichungstag der Anmeldung: 21.04.2010
(73) Patentinhaber: Rational AG, 86899 Landsberg/Lech (DE)
(72) Erfinder: Kling, Judith, 86899, Landsberg a. Lech (DE); Greiner, Dr., Michael, 86899, Landsberg (DE); März, Wilhelm, 86833, Siebnach (DE); Seemüller, Simon, 86825, Bad Wörishofen (DE); Jürgens, Andrea, 82194, Gröbenzell (DE); Wiedemann, Peter, 86836, Klosterlechfeld (DE)
(74) Vertreter: Weber-Bruls, Dorothée

(56) Entgegenhaltungen:
- WO-A1-2006/045290

## Beschreibung

Die vorliegende Erfindung betrifft ein Verfahren zum Führen zumindest eines Garprozesses, bei dem zumindest zeitweise zumindest zwei Gargüter in zumindest einem Garraum zumindest eines Gargeräts in Abhängigkeit zumindest ihrer jeweiligen Kerntemperatur gegart werden und zumindest zeitweise zumindest ein Kerntemperaturfühler in einem der beiden Gargüter zum Einsatz kommt.

Solch ein Verfahren ist beispielsweise aus der US 4,036,995 bekannt, wobei für jedes Gargut ein Kerntemperaturfühler zum Einsatz kommt, wodurch eine große Anzahl von Kerntemperaturfühlern notwendig wird, was wiederum arbeits- sowie kostenintensiv ist.

Ein weiteres gattungsgemäßes Verfahren ist aus der EP 1 703 809 B1 bekannt, mit dem Garchargen, die aus einer Vielzahl an individuellen Gargütern unterschiedlichen Kalibers zusammengesetzt sind, optimal gegart werden können, indem für jedes individuelle Gargut ein optimales Garresultat in einem einzigen, zusammenhängenden Garprozess erhalten wird. Zu diesem Zwecke kann ein Kerntemperaturfühler in ein Gargut mit einem kleinsten Kaliber eingesteckt werden, so dass der Garprozess in Abhängigkeit der Kerntemperatur dieses Garguts geführt wird, und zwar bis dasselbe fertig gegart wird. Sodann wird der Kerntemperaturfühler aus dem Gargut mit dem kleinsten Kaliber entfernt, das fertig gegarte Gargut aus dem Garraum entfernt und der Kerntemperaturfühler in das dann vom Kaliber her kleinste Gargut gesteckt. Diese Schritte sind so lange wiederholbar, bis alle Gargüterder Charge fertig gegart sind. Dabei kann anhand des Anstiegs der erfassten Kerntemperatur pro Zeit bei definierter Garraumtemperatur und Lüfterstufe in einem Gargerät, also bei einem definierten Energieübertrag auf die Gargüter, erkannt werden, um welches Kaliber es sich bei dem jeweils zu vermessenden Gargut handelt, so dass, sobald das Kaliber des Garguts ermittelt worden ist, der Garprozess in Abhängigkeit von dem Kaliber geführt werden kann, um das gewünschte Garresultat zu erhalten. Nachteilig dabei ist jedoch, dass der Kerntemperaturfühler so lange in einem Gargut verbleibt, bis dasselbe fertig gegart wird, und vorher nicht anderweitig eingesetzt werden kann.

Weiterhin offenbart die DE 101 14 617 A1 eine Vorrichtung zum Garen von Nahrungsmitteln mit einem Garraum. In dem Garraum werden mehrere Gargüter angeordnet und es werden zwei Kerntemperatufühler in zwei getrennte Gargüter eingeführt und basierend auf den Daten der Kerntemperaturfühler, die gleichzeitig aufgenommen werden, wird ein Garvorgang durchgeführt.

Aufgabe der vorliegenden Erfindung ist es, das gattungsgemäße Verfahren derart weiterzuentwickeln, dass die Nachteile des Stands der Technik überwunden werden.

Diese Aufgabe wir erfindungsgemäß gelöst durch folgende Schritte:
Einstecken des Kerntemperaturfühlers in eines der beiden Gargüter,
Aufnehmen von Messwerten des Kerntemperaturfühlers zur Bestimmung zumindest einer für den Garprozess des einen Garguts charakteristischen ersten Größe,
Umstecken des Kerntemperaturfühlers in das andere der beiden Gargüter, wenn die erste charakteristische Größe bestimmt ist, wobei vorzugsweise der Kerntemperaturfühler nicht so lange in dem einen Gargut verbleibt, bis dies fertig gegart wird,
Weitergaren der beiden Gargüter unter Berücksichtigung der ersten Größe,
Aufnehmen von Messwerten des Kerntemperaturfühlers zur Bestimmung zumindest einer für den Garprozess des anderen Garguts charakteristischen zweiten Größe, und
Fertiggaren der beiden Gargüter in Abhängigkeit von der ersten und/oder zweiten Größe.

Dabei kann vorgesehen sein, dass beim Umstecken des Kerntemperaturfühlers in das andere der beiden Gargüter der Kerntemperaturfühler vor Erreichen eines Kerntemperatur-Sollwerts des einen Garguts aus dem einen Gargut entnommen wird, insbesondere nicht so lange in dem einen Gargut verbleibt, bis dieses fertig gegart wird, und/oder die Messwerte des Kerntemperaturfühlers als Funktion der Zeit aufgenommen und ausgewertet werden.

Mit der Erfindung wird auch vorgeschlagen, dass die erste Größe und/oder die zweite Größe jeweils ausgewählt wird aus einer Gruppe, umfassend:
einen Soll-Kerntemperaturzwischenwert des jeweiligen Garguts, insbesondere bestimmt durch einen prozentualen Anteil an einem Soll-Kerntemperaturendwert, einen Maximalwert, einen Minimalwert, eine Steigung des Verlaufs der Kerntemperatur über die Zeit, vorzugsweise den Maximalwert der Steigung der Kerntemperatur über die Zeit in einem vorgegebenen Zeitintervall, und/oder einen Wendepunkt des Verlaufs der Kerntemperatur über die Zeit, vorzugsweise den Nullpunkt der zweiten Ableitung der Kerntemperatur nach der Zeit, eine Gargutausgangsgröße des jeweiligen Garguts, insbesondere bestimmt durch das Kaliber des Garguts oder ob das Gargut frisch, gefroren oder vorgegart in den Garraum platziert worden ist, eine Garprozessgröße, insbesondere bestimmt durch eine Restgarzeit des jeweiligen Garguts, und/oder in einem Garschritt des eine Vielzahl an Garschritten umfassenden Verfahrens, und/oder den Ablauf eines Garschritts des Verfahrens, und/oder eine Garraumklimagröße, insbesondere bestimmt durch einen Soll-Zwischenwert, einen Maximalwert, einen Minimalwert, eine Steigung und/oder einen Wendepunkt der Temperatur, der Feuchtigkeit und/oder der Zirkulation der Atmosphäre im Garraum, vorzugsweise als Funktion der Zeit.

Erfindungsgemäß bevorzugte Ausführungsformen sind **dadurch gekennzeichnet, dass** die beiden Gargüter unterschiedlich sind, vorzugsweise hinsichtlich ihrer Gargutart und/oder ihres Kalibers, insbesondere wenn sie zeitgleich in dem selben Garraum gegart werden.
Ferner kann vorgesehen sein, dass die beiden Gargüter gleichzeitig oder nacheinander, insbesondere in einen Garraum, eingebracht und/oder gleichzeitig oder nacheinander aus dem jeweiligen Garraum entfernt werden, wobei vorzugsweise eine Vielzahl von Gargütern gegart wird.

Auch wird vorgeschlagen, dass über eine Anzeigeeinrichtung des Gargeräts eine, insbesondere visuelle und/oder akustische, Anweisung zur Entnahme des Kerntemperaturfühlers aus dem einen Gargut und/oder zum Umstecken des Kerntemperaturfühlers in das andere Gargut ausgegeben wird.

Das erfindungsgemäße Verfahren kann auch dadurch gekennzeichnet sein, dass ein Zeitpunkt zur Entnahme des Kerntemperturfühlers aus dem einen Gargut und/oder zum Umstecken des Kerntemperaturfühlers in das andere Gargut basierend auf der ersten Größe bestimmt wird, insbesondere der Zeitpunkt zur Entnahme und/oder Umstecken einem Zeitpunkt entspricht, ab dem
- eine Veränderung der ersten Größe und/oder der Kerntemperatur im wesentlichen keinen Einfluss mehr auf den weiteren Verlauf des Garprozesses hat, insbesondere die erste Größe und/oder die über den Kerntemperaturfühler aufgenommene Kerntemperatur des einen Garguts einen Wendepunkt durchläuft und/oder
- das eine Gargut gewendet wird,
- eine Veränderung der ersten Größe und/oder der Kerntemperatur eine Restzeitbestimmung für den Garprozess im wesentlichen nicht beinflusst, und/oder
- eine Kaliberberechnung des einen Garguts abgeschlossen ist, insbesondere von der ersten Größe und/oder von der Kerntemperatur eine Totzeit durchlaufen wurde.

Schließlich ist besonders bevorzugt, dass der Kerntemperaturfühler beim Umstecken aus einem ersten Gargerät, in dem das eine Gargut angeordnet wird, in ein zweites Gargerät, in dem das andere Gargut angeordnet wird, und/oder aus einem ersten Garraum eines dritten Gargerätes, in dem das eine Gargut angeordnet wird, in einen zweiten Garraum des dritten Gargeräts, in dem das andere Gargut angeordnet wird, überführt wird.

Der Erfindung liegt somit die überraschende Erkenntnis zu Grunde, dass beispielsweise bei einer Mischbeschickung oder rollierenden Beschickung in einem Garraum oder dem gleichzeitigen Garen in zwei Garräumen eine höhere Flexibilität unter gleichzeitiger Reduktion notwendiger Schritte sowie von Kosten dadurch bereitgestellt wird, dass lediglich ein Kerntemperaturfühler gezielt zum Einsatz kommt, und zwar für jedes Gargut immer nur so lange, wie das Garverfahren auch tatsächlich in Abhängigkeit von der Kerntemperatur dieses Garguts bestimmt wird und sich besagte Kerntemperatur noch in einem erheblichen Maße ändert.

Insbesondere ist dabei vorgesehen, dass ein Kerntemperaturfühler nicht solange in einem Gargut verbleibt, bis dasselbe fertig gegart wird, sondern der Kerntemperaturfühler bereits vor einem Fertiggaren des Garguts aus diesem entfernt wird und anderweitig einsetzbar ist. Das bedeutet, dass vor dem Erreichen eines eigentlichen Kerntemperatur-Sollendzustandes eines Garguts der Kerntemperaturfühler bereits aus dem Gargut entfernt wird und in ein anderes Gargut umgesteckt werden kann. Es ist also möglich, die Messung von einer Vielzahl von Kerntemperaturen in mehreren Gargütern mit nur einem Kerntemperaturfühler vorzunehmen und somit eine Steuerung einer Vielzahl von Garprozessen mit nur einem Kerntemperaturfühler durchzuführen.

Ab dem Zeitpunkt, ab dem ein Garverfahren nicht mehr tatsächlich in Abhängigkeit von einer Kerntemperatur eines Garguts bestimmt wird, also ab dem Zeitpunkt, ab dem eine Restzeitberechnung eines Garverfahrens eine hinreichende Genauigkeit erlangt hat und/oder nach einer abgeschlossenen Kalibererkennung eines Gargutes, kann einem Benutzer angezeigt werden, dass ein Kerntemperaturfühler aus dem Gargut entfernt werden kann und andersweitig nutzbar ist. Das erste Gargut, aus dem der Kerntemperaturfühler entfernt wurde, kann im Anschluss über besagte Restzeitberechnung fertig gegart werden und dem Benutzer wird nach Fertiggaren des ersten Garguts eine entsprechende Signalisierung ausgegeben, um dieses aus dem Garraum zu entfernen.

Der Zeitpunkt, ab dem ein Garverfahren nicht mehr tatsächlich in Abhängigkeit von der Kerntemperatur eines Garguts bestimmt wird, kann beispielsweise durch ein Erkennen eines Wendepunktes der Kerntemperatur bestimmt sein. Dieser Wendepunkt der Kerntemperatur ist nicht vorab als Soll-Kerntemperatur festlegbar, da dieser Punkt nicht von vorneherein bekannt ist. Besagter Wendepunkt ist dabei durch die zweite Ableitung der Kerntemperatur bestimmt. Nach Erreichen dieses Wendepunkts der Kerntemperatur, beispielsweise bereits wenigen Minuten nachdem ein Gargut in ein Gargerät eingebracht wurde, wird der Kerntemperaturfühler für den weiteren Verlauf des Garverfahrens eines Garguts nicht mehr benötigt. Der Kerntemperaturfühler kann daher beispielsweise in ein anderes Gargut umgesteckt werden, beispielsweise in ein nächst größeres Gargut eine Charge unterschiedlich großer Gargüter. Bei einer solchen Charge an Gargütern kann es sich beispielsweise um Kartoffeln verschiedener Größen handeln, jedoch sind auch eine Vielzahl anderer Gargüter vorstellbar, beispielsweise Steaks oder dergleichen, bei denen solch eine rollierende Beschickung durchführbar ist.

Es ist jedoch auch vorgesehen, dass im Rahmen einer rollierenden Beschickung, bei der die Größe der einzelnen Gargüter nicht entscheidend sein muss, ein Kerntemperaturfühler in ein beliebiges neu hinzugegebenes Gargut eingesteckt wird. Ebenfalls ist es vorgesehen, dass der Kerntemperaturfühler im Rahmen einer Mischbeschickung in ein neu hinzugegebenes Gargut eingeführt wird, welches nicht identisch ist mit den Gargütern der bereits sich im Gargerät befindlichen Gargüter. Des Weiteren ist vorgesehen, dass der Kerntemperaturfühler in ein weiteres Gargut umgesteckt wird, welches sich bereits von Beginn an im Garraum befand und bei dem eine Kerntemperatur-Führung des Garprozesses bis zum Ende eines Garverfahrens notwendig ist, insbesondere im Sinne einer intermetierenden Mischbeschickung.

Auch ist vorgesehen, dass ein Kerntemperaturfühler einem Benutzer in ein weiteres Gargerät und/oder eine weitere Ebene desselben Garguts gebracht wird und dort zum Einsatz kommt. Beispielsweise kann in einem Vario-Cooking-Center® der Anmelderin mit zwei Garräumen in Form von zwei Tiegeln und zwei Kerntemperaturfühlern angezeigt werden, sofern einer der beiden Kerntemperaturfühler nicht mehr benötigt wird, beispielsweise beim Braten verschieden großer Steaks im linken Tiegel und vom Kochfleisch im Niedertemperaturgaren im rechten Tiegel, so dass der freigewordene Kerntemperaturfühler im linken Tiegel in eines der Gargüter im rechten Tiegel umgesteckt werden kann, bevor das oder die Garverfahren abgeschlossen sind, also bevor die Gargüter fertig gegart sind.

Die Zeitpunkte, ab denen ein Garverfahren nicht mehr tatsächlich in Abhängigkeit von der Kerntemperatur eines Garguts bestimmt sind, kann beispielsweise besagtes Erreichen eines Wendepunktes einer Kerntemperatur sein. Auch kann eine erfolgreiche Kalibererkennung eines Garguts eine Beeinflussung eines Garraumklimas in Abhängigkeit des erkannten Kalibers bzw. einer Abschätzung der Garzeit über die Kalibergröße bedingen. Auch ist vorgesehen, dass ein Kerntemperaturverlauf über einen bestimmten Zeitraum erfasst wird und eine Aussage basierend auf der Totzeit eines Kerntemperatur-Anstiegs getroffen wird.

Ebenfalls ist es möglich, besagten Zeitpunkt nach kerntemperaturrelevanten Prozessschritten zu bestimmen, beispielsweise bei einem Niedertemperatur-Garen nach Abschluss eines Anbratens und Abkühlens des Garguts. In diesem Fall ist bereits mit hinreichender Genauigkeit das Kaliber eines Garguts erkannt, so dass ohne Nutzung des Kerntemperaturfühlers ein Fertiggaren möglich ist.

Ein weiterer Zeitpunkt, ab dem ein Garverfahren nicht mehr tatsächlich in Abhängigkeit von der Kerntemperatur eines Garguts bestimmt wird, kann gleichsam durch einen Gargutwendezeitpunkt festgelegt werden.

Zusammengefasst kann also ein Zeitpunkt, ab dem ein Garverfahren nicht mehr tatsächlich in Abhängigkeit von einer Kerntemperatur eines Garguts bestimmt wird, durch den Zeitpunkt eines Wendepunkts einer Kerntemperatur, einer erfolgreichen Kalibererkennung des zu garenden Garguts, dem Zeitpunkt nach Abschluss von kerntemperaturrelevanten Prozessschritten und/oder dem Gargutwendezeitpunkt bestimmt werden.

Dabei ist vorgesehen, einem Benutzer die freigewordene Verfügbarkeit eines Kerntemperaturfühlers anzuzeigen und/oder einem Benutzer einen Vorschlag für eine weitere Verwendung des Kerntemperaturfühlers zu unterbreiten, lange bevor ein Gargut fertig gegart ist.

Nachdem nun der Kerntemperaturfühler wieder frei verfügbar ist, kann er in ein beliebiges anderes Gargut umgesteckt werden, wobei sich das weitere Gargut bereits in dem Garraum eines Gargeräts, indem sich der Kerntemperaturfühler befindet, befinden kann oder neu in den Garraum eingebracht wird und es kann ebenfalls vorgesehen sein, dass der Kerntemperaturfühler auf einer anderen Ebene eines Gargeräts, in einem anderen Tigel eines Gargeräts oder auch in einem anderen Gargerät Verwendung findet.

Weitere Merkmale und Vorteile der Erfindung ergeben sich aus der nachfolgenden Beschreibung von Ausführungsbeispielen des erfindungsgemäßen Verfahrens. Bei den folgenden Verfahren wird davon ausgegangen, dass das entsprechende Gargut in einem Gargerät gegart wird, wie es unter dem Handelsnamen SelfCooking Center® von der Anmelderin vertrieben wird. Dabei soll auch ein üblicher Kerntemperaturfühler zum Einsatz kommen, wie er beispielsweise in der DE 299 23 215 U1 der Anmelderin beschrieben ist.

Im Anschluss werden verschiedene Ausführungsbeispiele eines erfindungsgemäßen Verfahrens erläutert:

### 1. Kalibererkennung

Es sind zahlreiche Gargüter bekannt, die in einem Garverfahren optimal gegart werden können, wenn die Kerntemperatur derselben zur Kalibererkennung genutzt wird, wäh-rend eine Erfassung der Kerntemperatur nach besagter Kalibererkennung nicht mehr zum Führen des Garverfahrens notwendig ist.

Soll beispielsweise eine große Charge an Kartoffeln in einem Garraum eines SelfCoo-king Centers® gedämpft werden, so wird erfindungsgemäß ein Kerntemperaturfühler zuerst in die kleinste Kartoffel hineingesteckt, um in Abhängigkeit des Verlaufs der Kerntemperatur über die Zeit in der kleinsten Kartoffel deren Kaliber (erste Größe) zu bestimmen, um nach besagter Bestimmung den Kerntemperaturfühler in die zweit-kleinste Kartoffel zur Bestimmung deren Kaliber (zweite Größe) zu stecken, während das Garverfahren ab Erkennung des Kalibers der kleinsten Kartoffel in Abhängigkeit besagten Kalibers geführt wird. Sobald dann das Kaliber der zweitkleinsten Kartoffel erkannt worden ist, wird der Kerntemperaturfühler in die drittkleinste Kartoffel ge-steckt, während das Garverfahren in Abhängigkeit von den Kalibern der beiden kleinsten Kartoffeln weitergeführt wird. Mit dem Umstecken wird so lange fortgefahren, bis das Garverfahren der Charge beendet oder der Kerntemperaturfühler in die größte Kartoffel eingesteckt worden ist.

Werden altemativerweise Kartoffeln bei rollierender Beschickung gedämpft, beispiels-weise durch ein Nacheinander-Einbringen von Kartoffeln in drei unterschiedliche Ein-schubebenen des SelfCooking Centers®, so kann der Kerntemperaturfühler von der kleinsten Kartoffel der ersten Einschubebene in die kleinste Kartoffel der zweiten Ein-schubebene nach Erkennung des Kalibers der ersten Kartoffel umgesteckt werden. In einem nächsten Schritt kann dann in die kleinste Kartoffel der folgenden Einschubebene der Kerntemperaturfühler umgesteckt werden.

Werden in zwei nebeneinander angeordneten SelfCooking Centers® Kartoffeln ge-dämpft, so kann der Kerntemperaturfühler zuerst in die kleinste Kartoffel des einen Gargeräts und nach Erkennung deren Kaliber in die kleinste Kartoffel des anderen Gar-geräts zu deren Kalibererkennung umgesteckt werden, so dass schlussendlich das Dämpfen in dem einen Garraum in Abhängigkeit von dem Kaliber der kleinsten Kartof-fel in demselben und das Dämpfen in dem anderen Garraum in Abhängigkeit von der kleinsten Kartoffel in dem anderen Gargerät geführt werden.

Auf jeden Fall bleibt festzuhalten, dass beim Dämpfen von Kartoffeln ein Kerntempera-turfühler lediglich zur Kalibererkennung benötigt wird, so dass er nach besagter Kali-bererkennung anderweitig verwandt werden kann.

Das Kaliber eines Garguts lässt sich beispielsweise aus der Anfangssteigung des Kerntemperaturverlaufs über die Zeit in für das Dämpfen von Kartoffeln ausreichender Genauigkeit bestimmen. Genauer gesagt wird aus der maximalen Steigung der Kerntemperatur über die Zeit innerhalb bspw. der ersten Minuten(n) eines Garverfahrens das Kaliber anhand eines Vergleichs mit zuvor ermittelten empirischen Werten bestimmt.

### 2 Abkühlen

Soll beispielsweise ein Niedertemperatur-Braten stattfinden, so folgt nach einem An-braten (erster Garschritt) ein Abkühlen (zweiter Garschritt), an das sich wiederum ein Garen (dritter Garschritt) anschließt, wobei die Erfassung der Kerntemperatur eines Bratens lediglich für das Führen des Verfahrens während des Abkühlens notwendig ist, so dass der in den Braten eingesteckte Kerntemperaturfühler nach Vollendung des zweiten Garschritts beim Niedertemperatur-Braten aus demselben entfernt und ander-weitig, beispielsweise in einem anderen Gargerät, genutzt werden kann. Somit stellt der Zeitpunkt des Ablaufs des zweiten Garschritts eine charakteristische erste Größe dar.

### 3 Restzeitbestimmung

Eine Restgarzeit lässt sich bspw., wie im Rahmen der PCT/DE2008/001363 beschrei-ben, in drei Phasen bestimmten.

In einer ersten Phase wird dabei mittels von einem Kunden eingestellten Parametern ei-ne erste Grobabschätzung einer maximalen Garzeit oder ein minimalen Garzeit durch-geführt. In einer zweiten Phase findet eine Grobberechnung anhand eines Vergleichs eines Ist-Kerntemperaturverlaufs mit einem Soll-Kerntemperaturverlauf statt, während diese grobe Berechnung in einer dritten Phase mittels weiterer Algorithmen verfeinert werden kann. Grundsätzlich ist es dabei ausreichend, einen Kerntemperaturfühler bis zum Ende der zweiten Phase in einem Gargut zu belassen. Sodann kann der Kerntem-peraturfühler anderweitig gesetzt werden, beispielsweise in ein Gargut einer anderen Gargutart oder eines anderen Kalibers oder einer anderen Charge oder in einem anderen Garraum.

### 4 Ausführungsbeispiel für eine rollierende Beschickung mit Restzeitbestimmung

Für eine rollierende Beschickung mit Gargütern, beispielsweise mit Rindersteaks unterschiedlicher Chargen (Dicken), ist es zunächst vorgesehen, einen geeigneten Garprozess für die Zubereitung der Charge, beispielsweise "Grillen", auszuwählen und zu Starten und gebenenfalls eine Wunscheinstellung für den Gargrad einzugeben (beispielsweise dunkel und/oder medium). Im Anschluss an diese Eingaben wird das Gargerät zunächst automatisch vorgeheizt, in den gegebenen Beispiel mit einer Betriebsart "Heißluft" und einer Garraumtemperatur von 290° C.

Nachdem eine Beladungsaufforderung an den Benutzer erfolgt ist, werden die ersten Steaks einer Charge in das vorgeheizte Gargerät gegebenen und die "Grillphase" wird bei 250° C gestartet. Dabei liegt zunächst eine minimale Kerntemperatur nach der Beladung (4° C) der Gargüter vor, welche mittels eines Kerntemperaturfühlers erkannt wird. Im Anschluss an diese Erkennung wird für einen bestimmten Zeitraum, beispielsweise für zwei Minuten, der Anstieg der Kerntemperatur und dessen Steigung (dKT) beobachtet und die maximale Steigung der Kerntemperatur (dKTₘₐₓ₁) wird ermittelt, beispielsweise dKTₘₐₓ₁ = 0,90.

Ausgehend vom Wendepunkt der ermittelten Funktion, also dem Punkt, an dem die zweite Ableitung verschwindet, also gleich "0" ist, kann nunmehr die Restzeit des "Grillens" ermittelt werden.

Die Restgarzeit kann bekannterweise in drei Phasen bestimmt werden, siehe Punkt 3. Nach dem Bestimmen des Wendepunktes kann nun mit Hilfe dieses Wertes die zweite Restzeit bestimmt werden, also beispielsweise die erwartete Restzeit ab diesem Zeitpunkt bei einer unveränderten Garraumtemperatur. Dies kann beispielsweise bei einer Garraumtemperatur von 250°C einer Zeit von 170 Sekunden entsprechen. Der Kerntemperaturfühler kann ab diesem Zeitpunkt aus dem Gargut entnommen werden und steht für eine weitere Verwendung zur Verfügung.

Dabei ist beispielsweise vorgesehen, dass eine neue Beladungsaufforderung des Gargeräts für eine zweite Gargutcharge, beispielsweise einer zweiten Steakcharge, einem Bediener angezeigt wird. Nach der Beladungsaufforderung wird die Charge in das nun 250° heiße Gargerät gegeben und gegebenenfalls werden die gewünschten Gargradparameter abgeändert.

Wiederum wird die minimale Kerntemperatur der eingebrachten Gargüter nach dem Beladen (4°C) erkannt und es wird innerhalb einer nachfolgenden Zeitspanne, beispielsweise wiederum zwei Minuten, die Steigung der Kerntemperatur beobachtet und die maximale Steigung der Kerntemperatur der zweiten Gargutcharge ermittelt, beispielsweise dKTₘₐₓ₂ = 0,78. Dieser veränderte Wert der maximalen Steigung der Kerntemperatur der zweiten Gargutcharge in Vergleich zu dem Wert der ersten Gargutcharge dKTₘₐₓ₁ kann beispielsweise daraus resultieren, dass größere Gargutkaliber eine geringere Steigung in der Kerntemperatur aufweisen, wobei der absolute Kerntemperaturwert der gewünschten Kerntemperatur, in diesem Fall bei Steaks beispielsweise 44°C, bei allen Kalibern annähernd identisch ist. Ausgehend vom Wendepunkt der Funktionen des zweiten Kerntemperaturverlaufs kann eine zweite Restzeitberechnung erfolgen. Diese ist wiederum in die bekannten drei Phasen eingeteilt.

Mit Hilfe des nun ermittelten zweiten Wendepunkts der zweiten Kerntemperatur wird die zweite Restzeit bestimmt, beispielsweise die erwartete zweite Restzeit bei einer unveränderten Gartemperatur von 250°C von in diesem Fall 325 Sekunden. Da die Garraumtemperatur aufgrund des Einbringens der zweiten Charge nun vernachlässigbar verändert wurde und die gewünschte Garraumtemperatur von 250°C innerhalb kürzester Zeit wieder erreicht ist, hat auch die zu ermittelnde Restzeit der ersten Charge weiterhin Bestand. Ab diesem Zeitpunkt könnte der Kerntemperaturfühler in ein weiteres Gargut einer dritten Gargutcharge, beispielsweise weitere Steaks oder ein beliebiges anderes Gargut, umgesteckt werden.

### 5 Ausführungsbeispiel zur Kalibererkennung bei einer Mischbeschickung

Es kann vorgesehen sein, dass zwei unterschiedliche Gargüter gegart werden sollen, beispielsweise sowohl ein Schweinebraten als auch ein Huhn. Dafür wird zunächst ein geeigneter Garprozess für eine Mischbeschickung, beispielsweise ein "Braten" gestartet. Ein Gargerät, bei dem es sich beispielsweise um einen Kombidämpfer der Anmelderin handeln kann, wird dementsprechend automatisch vorgeheizt, beispielsweise mit der Betriebsart "Heißluft", auf eine Garraumtemperatur von 220°C. Nach erfolgter Beladungsaufforderung wird der Schweinebraten in das vorgeheizte Gerät gegeben. Die entsprechende Bratphase des Schweinebratens startet bei 200°C.

Die minimale Kerntemperatur nach dem Beladen KTₘᵢₙ₁ wird erkannt und der Verlauf der Kerntemperatur über einen bestimmten Zeitraum, beispielsweise von zwei Minuten, ab der Bestimmung minimalen Kerntemperatur wird beobachtet. Ausgehend von der maximalen Steigung der Kerntemperatur (dKTₘₐₓ₁) kann nun das Kaliber des Bratens bestimmt werden. Wenn beispielsweise die maximale Steigung der Kerntemperatur (dKTₘₐₓ₁) innerhalb der ersten beiden Minuten ab dem Erkennen der minimalen Kerntemperatur beispielsweise 0,3 beträgt, kann aus empirischen Daten abgeleitet werden, dass es sich hierbei um einen relativ großen Braten handeln muss. Weiterhin resultiert aus zusätzlich empirisch ermittelten Daten, dass die Garraumtemperatur um 20°C reduziert werden muss, um eine "Bräunung" entsprechend den vorgewählten Parametern zu erreichen. Daraus folgt, dass die Garraumtemperatur auf 180°C abgesenkt wird.

Eine entsprechende Restzeitberechnung kann in besagten drei Phasen bestimmt werden. Nachdem, wie oben ausgeführt, die maximale Steigung der Kerntemperatur ermittelt wurde (0,3), kann auf Basis dieses Wertes die Restzeit des "Bratens" festgelegt werden. In dem gegebenen Beispiel beträgt die erwartete Restzeit ab diesem Zeitpunkt, bei einer unveränderten Garraumtemperatur von 180°C, circa zwei Stunden. Damit sind die Gargrößen des ersten Garguts, des Schweinebratens, festgelegt, da sowohl die Klimaparameter als auch die Garzeit bestimmt ist. Der Kerntemperaturfühler kann aus dem Gargut entnommen werden und steht für weitere Gargüter zur Verfügung.

Im Anschluss kann nun eine Beladungsaufforderung des Gargeräts für das zweite Gargut, in dem gegebenen Beispiel für das Huhn, erfolgen. Nach der Beladungsaufforderung wird nun das Huhn in das nun 180°C heiße Gargerät eingebracht und die minimale Kerntemperatur nach dem Beladen (KTₘᵢₙ₂) wird bestimmt und über einen Zeitraum, der in diesem Fall zwei Minuten ab Bestimmung der minimalen Kerntemperatur beträgt, wird die Steigung der Kerntemperatur erfasst (dKT₂). Ausgehend von der maximalen Steigung der Kerntemperatur können sowohl das Kaliber des Huhns als auch die Restgarzeit des Huhns bestimmt werden. Beträgt die maximale Steigung der Kerntemperatur in den ersten beiden Minuten z. B. 0,7, kann aus empirischen Daten abgeleitet werden, dass es sich hierbei um ein Huhn mittlerer Größe handeln kann, weiterhin kann aus empirisch ermittelten Daten bestimmt werden, dass die Garraumtemperatur von derzeit 180°C nicht angepasst werden muss, um eine gewünschte Bräunung des Huhns zu erreichen. Dementsprechend wird die Garraumtemperatur von 180°C aufrechterhalten. Die entsprechende Restzeitberechnung kann nun mittels bekannter drei Phasen bestimmt werden.

Nachdem die maximale Steigung der Kerntemperatur ermittelt wurde (0,7) wird nun basierend auf diesem Wert die Restgarzeit des Huhns festgelegt, beispielsweise bei einer unveränderten Garraumtemperatur von 180°C circa 35 Minuten. Da die Garraumtemperatur aufgrund des zweiten Garguts (Huhn) nicht verändert werden musste, hat auch die zuerst ermittelte Restzeit des Schweinebratens weiterhin Bestand.

Ab diesem Zeitpunkt kann der Kerntemperaturfühler in ein weiteres Gargut eingeführt werden und steht somit zur freien Verfügung für weitere Garprozesse.

## Patentansprüche

1. Verfahren zum Führen zumindest eines Garprozesses, bei dem zumindest zeitweise zumindest zwei Gargüter in zumindest einem Garraum zumindest eines Gargeräts in Abhängigkeit zumindest ihrer jeweiligen Kerntemperatur gegart werden und zumindest zeitweise zumindest ein Kerntemperaturfühler in einem der beiden Gargüter zum Einsatz kommt,
**gekennzeichnet durch** folgende Schritte:
Einstecken des Kerntemperaturfühlers in eines der beiden Gargüter,
Aufnehmen von Messwerten des Kerntemperaturfühlers zur Bestimmung zumindest einer für den Garprozess des einen Garguts charakteristischen ersten Größe,
Umstecken des Kerntemperaturfühlers in das andere der beiden Gargüter, wenn die erste charakteristische Größe bestimmt ist,
Weitergaren der beiden Gargüter unter Berücksichtigung der ersten Größe,
Aufnehmen von Messwerten des Kerntemperaturfühlers zur Bestimmung zumindest einer für den Garprozess des anderen Garguts charakteristischen zweiten Größe, und
Fertiggaren der beiden Gargüter in Abhängigkeit von der ersten und/oder zweiten Größe.

2. Verfahren nach Anspruch 1, **dadurch gekennzeichnet, dass**
beim Umstecken des Kerntemperaturfühlers in das andere der beiden Gargüter der Kerntemperaturfühler vor Erreichen eines Kerntemperatur-Sollwerts des einen Garguts aus dem einen Gargut entnommen wird, insbesondere nicht so lange in dem einen Gargut verbleibt, bis dieses fertig gegart wird, und/oder die Messwerte des Kerntemperaturfühlers als Funktion der Zeit aufgenommen und ausgewertet werden.

3. Verfahren nach Anspruch 1 oder 2, **dadurch gekennzeichnet, dass** die erste Größe und/oder die zweite Größe jeweils ausgewählt wird aus einer Gruppe, umfassend:
einen Soll-Kerntemperaturzwischenwert des jeweiligen Garguts, insbesondere bestimmt durch einen prozentualen Anteil an einem Soll-Kerntemperaturendwert, einen Maximalwert, einen Minimalwert, eine Steigung des Verlaufs der Kerntemperatur über die Zeit, vorzugsweise den Maximalwert der Steigung der Kerntemperatur über die Zeit in einem vorgegebenen Zeitintervall, und/oder einen Wendepunkt des Verlaufs der Kerntemperatur über die Zeit, vorzugsweise den Nullpunkt der zweiten Ableitung der Kerntemperatur nach der Zeit, eine Gargutausgangsgröße des jeweiligen Garguts, insbesondere bestimmt durch das Kaliber des Garguts oder ob das Gargut frisch, gefroren oder vorgegart in den Garraum platziert worden ist, eine Garprozessgröße, insbesondere bestimmt durch eine Restgarzeit des jeweiligen Garguts, und/oder in einem Garschritt des eine Vielzahl an Garschritten umfassenden Verfahrens, und/oder den Ablauf eines Garschritts des Verfahrens, und/oder eine Garraumklimagröße, insbesondere bestimmt durch einen Soll-Zwischenwert, einen Maximalwert, einen Minimalwert, eine Steigung und/oder einen Wendepunkt der Temperatur, der Feuchtigkeit und/oder der Zirkulation der Atmosphäre im Garraum, vorzugsweise als Funktion der Zeit.

4. Verfahren nach einem der vorangehenden Ansprüche, **dadurch gekennzeichnet, dass** die beiden Gargüter unterschiedlich sind, vorzugsweise hinsichtlich ihrer Gargutart und/oder ihres Kalibers, insbesondere wenn sie zeitgleich in dem selben Garraum gegart werden.

5. Verfahren nach einem der vorangehenden Ansprüche, **dadurch gekennzeichnet, dass** die beiden Gargüter gleichzeitig oder nacheinander, insbesondere in einen Garraum, eingebracht und/oder gleichzeitig oder nacheinander aus dem jeweiligen Garraum entfernt werden, wobei vorzugsweise eine Vielzahl von Gargütern gegart wird.

6. Verfahren nach einem der vorangehenden Ansprüche, **dadurch gekennzeichnet, dass** über eine Anzeigeeinrichtung des Gargeräts eine, insbesondere visuelle und/oder akustische, Anweisung zur Entnahme des Kerntemperaturfühlers aus dem einen Gargut und/oder zum Umstecken des Kerntemperaturfühlers in das andere Gargut ausgegeben wird.

7. Verfahren nach einem der vorangehenden Ansprüche, **dadurch gekennzeichnet, dass** ein Zeitpunkt zur Entnahme des Kerntemperturfühlers aus dem einen Gargut und/oder zum Umstecken des Kerntemperaturfühlers in das andere Gargut basierend auf der ersten Größe bestimmt wird, insbesondere der Zeitpunkt zur Entnahme und/oder Umstecken einem Zeitpunkt entspricht, ab dem
- eine Veränderung der ersten Größe und/oder der Kerntemperatur im wesentlichen keinen Einfluss mehr auf den weiteren Verlauf des Garprozesses hat, insbesondere die erste Größe und/oder die über den Kerntemperaturfühler aufgenommene Kerntemperatur des einen Garguts einen Wendepunkt durchläuft
- das eine Gargut gewendet wird,
- eine Veränderung der ersten Größe und/oder der Kerntemperatur eine Restzeitbestimmung für den Garprozess im wesentlichen nicht beinflusst, und/oder
- eine Kaliberberechnung des einen Garguts abgeschlossen ist, insbesondere von der ersten Größe und/oder von der Kerntemperatur eine Totzeit durchlaufen wurde.

8. Verfahren nach einem der vorangehenden Ansprüche, **dadurch gekennzeichnet, dass** der Kerntemperaturfühler beim Umstecken aus einem ersten Gargerät, in dem das eine Gargut angeordnet wird, in ein zweites Gargerät, in dem das andere Gargut angeordnet wird, und/oder aus einem ersten Garraum eines dritten Gargerätes, in dem das eine Gargut angeordnet wird, in einen zweiten Garraum des dritten Gargeräts, in dem das andere Gargut angeordnet wird, überführt wird.

## Claims

1. A method for carrying out at least one cooking process, wherein at least two products to be cooked are cooked at least temporarily in at least one cooking chamber of at least one cooking appliance at least in dependence on their respective core temperature, and at least one core temperature probe is used at least temporarily in one of the two products to be cooked,
**characterized by** the steps of:
inserting the core temperature probe in one of the two products to be cooked,
collecting measured values of the core temperature probe in order to determine at least one first parameter that is characteristic of the cooking process of said one product to be cooked,
inserting the core temperature probe in the other of the two products to be cooked once the first characteristic parameter has been determined,
continuing to cook the two products to be cooked taking into account the first parameter,
collecting measured values of the core temperature probe in order to determine at least one second parameter that is characteristic of the cooking process of the other product to be cooked, and
completing the cooking of the two products to be cooked in dependence on the first and/or second parameter.

2. A method according to claim 1, **characterized in that**
when inserting the core temperature probe in the other of the two products to be cooked, the core temperature probe is removed from the one product to be cooked before reaching a desired core temperature value of the one product to be cooked, in particular does not remain in the one product to be cooked until said product is completely cooked, and/or the measured values of the core temperature probe are collected and evaluated as a function of time.

3. A method according to claim 1 or 2, **characterized in that**
the first parameter and/or the second parameter is/are selected from a group comprising:
a desired intermediate core temperature value of the respective product to be cooked, in particular determined by a percentage of a desired final core temperature value, a maximum value, a minimum value, a rise in the curve of the core temperature over time, preferably the maximum value of the rise of the core temperature over time in a predefined time interval, and/or a turning point of the curve of the core temperature over time, preferably the zero point of the second derivative of the core temperature with respect to time, an initial parameter of the respective product to be cooked, in particular determined by the caliber of the product to be cooked or the fact whether the product to be cooked has been placed in the cooking chamber in a fresh, frozen or precooked state, a cooking process parameter, in particular determined by a remaining cooking time of the respective product to be cooked, and/or in a cooking step of the method comprising a plurality of cooking steps, and/or the course of a cooking step of the method, and/or a cooking chamber climate parameter, in particular determined by a desired intermediate value, a maximum value, a minimum value, a rise and/or a turning point of the temperature, the humidity and/or the circulation of the atmosphere in the cooking chamber, preferably as a function of time.

4. A method according to any one of the preceding claims, **characterized in that** the two products to be cooked are different, preferably with respect to the type of product to be cooked and/or their caliber, in particular if they are cooked at the same time in the same cooking chamber.

5. A method according to any one of the preceding claims, **characterized in that** the two products to be cooked are introduced at the same time or one after the other, in particular into a cooking chamber, and/or are removed at the same time or one after the other from the respective cooking chamber, wherein preferably a plurality of products to be cooked are cooked.

6. A method according to any one of the preceding claims, **characterized in that** a display device of the cooking appliance outputs a request, in particular a visual and/or acoustic request, to remove the core temperature probe from the one product to be cooked and/or to insert the core temperature probe in the other product to be cooked.

7. A method according to any one of the preceding claims, **characterized in that** the first parameter is used as a basis for determining a time of removal of the core temperature probe from the one product to be cooked and/or of insertion of the core temperature probe in the other product to be cooked, in particular that the time of removal and/or insertion in the other product to be cooked corresponds to a time from which
- a change of the first parameter and/or of the core temperature has/have no longer a significant effect on the further course of the cooking process, in particular the first parameter and/or the core temperature of the one product to be cooked that is recorded by means of the core temperature probe passes a turning point,
- the one product to be cooked is turned around,
- a change of the first parameter and/or of the core temperature has no significant effect on a determination of the remaining time for the cooking process, and/or
- a calculation of the caliber of the one product to be cooked is finished, in particular the first parameter and/or the core temperature has/have passed a dead time.

8. A method according to any one of the preceding claims, **characterized in that** when the core temperature probe is inserted in the other product to be cooked, it is transferred from a first cooking appliance where the one product to be cooked is arranged into a second cooking appliance where the other product to be cooked is arranged, and/or from a first cooking chamber of a third cooking appliance where the one product to be cooked is arranged into a second cooking chamber of the third cooking appliance where the other product to be cooked is arranged.

## Revendications

1. Procédé pour mettre en oeuvre au moins un processus de cuisson, dans lequel, au moins par intermittence, au moins deux produits de cuisson vont être cuits dans au moins une chambre de cuisson d'au moins un appareil de cuisson, en fonction au moins de leur température à coeur respective, et au moins par intermittence, au moins une sonde de température va être utilisée dans l'un des deux produits de cuisson,
**caractérisé par** les étapes suivantes:
introduire la sonde de température à coeur dans l'un des deux produits de cuisson,
collecter des valeurs mesurées de la sonde de température à coeur, pour en déterminer au moins une première grandeur caractéristique pour le processus de cuisson du premier produit de cuisson,
déplacer la sonde de température à coeur dans l'autre des deux produits de cuisson, lorsque la première grandeur caractéristique est déterminée,
continuer de cuire les deux produits de cuisson compte tenu de la première grandeur,
collecter des valeurs mesurées de la sonde de température à coeur, pour en déterminer au moins une deuxième grandeur caractéristique pour le processus de cuisson de l'autre produit de cuisson, et
continuer de cuire les deux produits de cuisson en fonction de la première et/ou deuxième grandeur.

2. Procédé selon la revendication 1, caractérisé en ce durant le déplacement de la sonde de température à coeur dans l'autre des deux produits de cuisson, la sonde de température à coeur va être retirée avant d'atteindre une valeur théorique de température à coeur du premier produit de cuisson depuis le premier produit de cuisson, et ne va notamment pas rester dans le premier produit de cuisson jusqu'à ce que celui-ci soit totalement cuit, et/ou que les valeurs mesurées de température à coeur soient relevées et interprétées en fonction du temps.

3. Procédé selon la revendication 1 ou 2, **caractérisé en ce que** la première grandeur et/ou la deuxième grandeur vont être choisies chacune dans un groupe comprenant :
une valeur intermédiaire de température à coeur théorique du produit de cuisson correspondant, notamment déterminée par une partie en pourcentage d'une valeur finale de température à coeur théorique, une valeur maximum, une valeur minimum, une pente ascendante de la courbe de température à coeur au cours du temps, de préférence la valeur maximum de la pente ascendante de la courbe de température à coeur au cours du temps dans un laps de temps donné, et/ou un point d'inflexion de la courbe de la température à coeur au cours du temps, de préférence le point zéro de la deuxième dérivée de la température à coeur une fois le temps écoulé, une grandeur de sortie de produit de cuisson du produit de cuisson correspondant, notamment déterminée par le calibre du produit de cuisson, ou selon que le produit de cuisson ait été placé frais, congelé ou précuit dans la chambre de cuisson, une grandeur de processus de cuisson, notamment déterminée par un temps de cuisson restant du produit de cuisson correspondant, et/ou dans une étape de cuisson d'une multitude d'étapes de cuisson d'un procédé complet, et/ou par le déroulement d'une étape de cuisson du procédé, et/ou une grandeur de climat de chambre de cuisson, notamment déterminée parmi une valeur intermédiaire théorique, une valeur maximum, une valeur minimum, une pente ascendante et/ou un point d'inflexion de la température, l'humidité et/ou la circulation de l'atmosphère dans la chambre de cuisson, de préférence en fonction du temps.

4. Procédé selon l'une quelconque des revendications précédentes, **caractérisé en ce que** les deux produits de cuisson sont différents, de préférence eu égard à leur type et/ou leur calibre, en particulier lorsqu'ils sont cuits en même temps dans la même chambre de cuisson.

5. Procédé selon l'une quelconque des revendications précédentes, **caractérisé en ce que** les deux produits de cuisson sont déposés en même temps ou l'un après l'autre, en particulier dans une chambre de cuisson, et/ou sont enlevés en même temps ou l'un après l'autre de la chambre de cuisson correspondante, de sorte que de préférence une multitude de produits de cuisson sont cuits.

6. Procédé selon l'une quelconque des revendications précédentes, **caractérisé en ce qu'**une instruction, notamment visuelle et/ou auditive, va être émise au moyen d'un dispositif d'affichage de l'appareil de cuisson, pour retirer la sonde de température à coeur du premier produit de cuisson, et/ou pour déplacer la sonde de température à coeur jusque dans l'autre produit de cuisson.

7. Procédé selon l'une quelconque des revendications précédentes, **caractérisé en ce qu'**un instant pour retirer la sonde de température à coeur du premier produit de cuisson, et/ou pour déplacer la sonde de température à coeur jusque dans l'autre produit de cuisson, va être déterminé sur la base de la première grandeur, et correspondra en particulier à l'instant où
- une modification de la première grandeur et/ou de la température à coeur n'a pratiquement plus aucune influence sur le déroulement ultérieur du processus de cuisson, en particulier la première grandeur, et/ou la température à coeur du premier produit de cuisson prise par la sonde de température à coeur passe par un point d'inflexion,
- le premier produit de cuisson est retourné,
- une modification de la première grandeur et/ou de la température à coeur n'influence pratiquement pas la détermination d'un temps restant pour le processus de cuisson, et/ou
- un calcul de calibre du premier produit de cuisson est terminé, et qu'en particulier un temps mort survient à partir de la première grandeur, et/ou de la température à coeur.

8. Procédé selon l'une quelconque des revendications précédentes, **caractérisé en ce que** la sonde de température à coeur va être transférée par un déplacement à l'extérieur d'un premier appareil de cuisson, dans lequel va être disposé un premier produit de cuisson, jusque dans un deuxième appareil de cuisson, dans lequel va être disposé un deuxième produit de cuisson, et/ou à l'extérieur d'une première chambre de cuisson d'un troisième appareil de cuisson, dans laquelle va être disposé le premier produit de cuisson, jusque dans une deuxième chambre de cuisson du troisième appareil de cuisson, dans lequel va être disposé l'autre produit de cuisson.
